Europäisches Patentamt

European Patent Office

Office européen des brevets

(11) Publication number: **0 443 114 A2**

# EUROPEAN PATENT APPLICATION

(21) Application number: 90122702.5

(51) Int. Cl.⁵: **H04N 7/133**

(22) Date of filing: 28.11.90

(30) Priority: 23.02.90 US 484149

(43) Date of publication of application:
28.08.91 Bulletin 91/35

(84) Designated Contracting States:
DE FR GB

(71) Applicant: INTERNATIONAL BUSINESS
MACHINES CORPORATION

Armonk, NY 10504(US)

(72) Inventor: **Feig, Ephraim**
**91 North State Road**
**Briarcliff Manor, New York 10510(US)**
Inventor: **Mitchell, Joan L.**
**7 Cherry Hill Circle**
**Ossining, New York 10562(US)**

(74) Representative: **Schäfer, Wolfgang, Dipl.-Ing.**
**European Patent Attorney, IBM Deutschland**
**GmbH, Schönaicher Strasse 220**
**W-7030 Böblingen(DE)**

(54) Methods and apparatus for image-data decompression.

(57) A system is described for processing a sequence of groups of compressed quantized transform coefficients representing a two-dimensional image. The system comprises special-pattern testing means for determining for each group of compressed quantized transform coefficients in turn whether the group corresponds to one of a predetermined plurality of special patterns of zero and nonzero quantized transform coefficients. Furthermore, the system includes a plurality of special-pattern inverse transform means, each special-pattern inverse-transform means being associated with one of the special patterns of zero and nonzero quantized transform coefficients for performing an inverse scaled two-dimensional discrete-cosine-transform process on groups of transform coefficients determined by the special-pattern testing means to correspond to the associated special pattern. Finally, full inverse-transform means are provided for performing an inverse scaled two-dimensional discrete-cosine-transform process on groups of transform coefficients determined by the special-pattern testing means not to correspond to any of the predetermined plurality of special patterns of zero and nonzero quantized transform coefficients.

FIG. 7A

FIG.7B

The present invention broadly concerns the processing of data representing two-dimensional images and the like. More particularly, the present invention concerns the conversion of "compressed" image data which compactly encodes data representative of a two-dimensional image or the like to "decompressed" image data which is representative of a reconstruction of the image or the like.

A picture or other planar visual image can be accurately represented numerically by dividing the image into a two-dimensional array of picture elements or "pixels" which are sufficiently small and assigning a numeric value to each pixel which appropriately represents the brightness or other visual quality of the image over the pixel. The various numeric values in a collection of such image data representing a visual image can be conveniently indexed by two independent indices which represent the two coordinates which define the location of the pixel in the image. Consequently, a collection of numeric values representing a planar visual image can be conveniently treated as a two-dimensional array of numbers.

Two-dimensional arrays of image data can be digitally processed in a digital computer or other digital processor - for example, to analyze the image represented by the data or to alter the image to enhance the display of certain aspects of the image.

One application of digital processing of two-dimensional arrays of numeric data representing visual images which is particularly significant has the goal of reducing the number of numeric values needed to represent a given image without unduly diminishing the visual quality of the image. It is an advantage to reduce the number of image-data values required to represent an image satisfactorily, since if the number of image-data values can be reduced, the number of digital representations of images which can be stored in a given amount of digital memory can be increased and the speed with which a digital representation of an image can be transmitted digitally from one point to another can be increased. A digital processing technique which serves to reduce the number of numeric values needed to represent a visual image is referred to generally as an image-data "compression" technique.

In a number of digital image processing applications, the discrete cosine transform plays an important role. Of particular importance are the two-dimensional forward discrete cosine transform and inverse discrete cosine transform for two-dimensional arrays of numbers. A two-dimensional forward discrete cosine transform carried out, for example, on an 8 x 8 array of numbers yields an 8 x 8 array of values referred to as discrete-cosine-transform coefficients. Often in image-processing applications, two-dimensional arrays of discrete-cosine-transform coefficients are subjected to a "quantization" process, which involves dividing individual coefficients by an array-position-dependent scale factor and either rounding or truncating the result. In particular, quantized discrete cosine transforms have been widely used in data compression techniques for continuous-tone color images. See, for example, A. K. Jain, Fundamentals of Digital Image Processing, (Prentice Hall, Englewood Cliffs, New Jersey, 1989); W. B. Pennebaker et al., IBM Journal of Research and Development, volume 32, pages 717-726 (November 1988); J. L. Mitchell and W. B. Pennebaker, ibid. pages 727-736; W. B. Pennebaker and J. L. Mitchell, ibid. pages 737-752; and Arai et al., Transactions of the IEICE, Volume E 71, pages 1095-1097 (November 1988).

Draft specifications for data-compression procedures and systems suitable for two-dimensional color-image data have been developed by a standards committee known as the "Joint Photographic Expert Group" ("JPEG") working within the International Organization for Standardization ("ISO") and the International Electrotechnical Commission ("IEC"). A document identified as:

JPEG Technical Specifications

Revision 5 (December 15, 1989)

JPEG

ISO/IEC JPC1/SC2/WG8

CCITT SGVIII

Document No. JPEG-8-R5,

("the draft JPEG Technical Specifications") is a draft technical specification for various color-image data-compression schemes. The document is available from the Computer and Business Equipment Manufacturers Association, 311 First Street NW, Washington, DC. Among the color-image data-compression schemes described in the draft JPEG Technical Specifications is a sequential discrete-cosine-transform system with Huffman coding (chapter 7) and a sequential discrete-cosine-transform system with arithmetic coding (chapter 8).

For baseline sequential discrete-cosine-transform image-data compression systems with Huffman coding described in the draft JPEG Technical Specifications, an image is effectively divided into 8 x 8 blocks of pixels and digital image data for each 8 x 8 block of pixels is processed sequentially. A two-dimensional forward discrete-cosine-transform is calculated for each 8 x 8 array of image data values representing an 8 x 8 block of pixels. The precision of the input image data values is limited to eight bits. The resulting 8 x 8 arrays of discrete-cosine-transform coefficients are quantized coefficient-by-coefficient following array-position-dependent scalar quantization rules set forth in the draft JPEG Technical Specifications to yield 8 x 8 arrays of quantized discrete-cosine-transform coefficients.

The effective word length of the quantized coefficients varies from eleven bits downward from coefficient to coefficient in accordance with the quantization rules, which gives rise to an effective compression of the data. Furthermore, often certain of the quantized discrete-cosine-transform coefficients in an array tend to be zero, and the coefficients can be arranged as a vector in which the coefficients which tend to be zero are positioned at the end of the vector. As a result, further data compression can be achieved by truncating the vector at the last non zero component, and appending some descriptor of the vector length or marker of the vector end. The degree of data compression - and the corresponding image quality - is essentially determined by the quantization of the discrete-cosine-transform coefficients. The quantized discrete-cosine-transform coefficients from an 8 x 8 array can be arranged as a group in a compressed format of compressed quantized transform coefficients for efficient storage or transmission.

To construct an output image from a sequence of groups of compressed quantized transform coefficients, the various quantized coefficients of each group can be rescaled coefficient-by-coefficient by the inverse of the corresponding scaling factor applied upon quantization. The resulting "dequantized" coefficients from the group - augmented as required by zeros - can be rearranged as an 8 x 8 array. The resulting 8 x 8 arrays of "dequantized" coefficients can be subjected in turn to a two-dimensional inverse discrete cosine transform to yield 8 x 8 arrays of reconstituted image data values. From the 8 x 8 arrays of reconstituted image data values, an output image can be formed.

The discrete cosine transform is particularily useful for image data-compression systems since, for 8 x 8 blocks of pixels from typical images, the forward discrete cosine transform generally concentrates the image intensity of the 64 pixels in each block into a relatively small number of transform coefficients. For a given 8 x 8 block of pixels, eight times the average of the intensity values of the 64 pixels is found in one so-called "DC coefficient." Of the remaining sixty-three so-called "AC coefficients," typically only a few have non-zero values. This effect is enhanced by the greater sensitivity of the human eye for intensity variations corresponding to the "lower frequency" coefficients. Consequently, coarser quantizers are generally used for the "high frequency" coefficients. As a result, the high-frequency terms are even more likely to be zero.

For purposes of data compression, each two-dimensional array of discrete cosine transform coefficients can be rearranged into a one-dimensional vector using a "zigzag" pattern indexing scheme. Table 1 shows the zigzag indexing pattern for an 8 x 8 array relative to the normal two-dimensional array positions. In the zigzag indexing pattern the "lower frequency" coefficients tend to have lower numbered indices than the "higher frequency" coefficients. Coefficient 0 is the DC coefficient referred to above.

## Table 1.  Zigzag Indexing Pattern

| 0 | 1 | 5 | 6 | 14 | 15 | 27 | 28 |
|---|---|---|---|----|----|----|----|
| 2 | 4 | 7 | 13 | 16 | 26 | 29 | 42 |
| 3 | 8 | 12 | 17 | 25 | 30 | 41 | 43 |
| 9 | 11 | 18 | 24 | 31 | 40 | 44 | 53 |
| 10 | 19 | 23 | 32 | 39 | 45 | 52 | 54 |
| 20 | 22 | 33 | 38 | 46 | 51 | 55 | 60 |
| 21 | 34 | 37 | 47 | 50 | 56 | 59 | 61 |
| 35 | 36 | 48 | 49 | 57 | 58 | 62 | 63 |

The sequential discrete-cosine-transform color-image-data-compression system with either Huffman coding or arithmetic coding described in the draft JPEG Technical Specifications requires an inverse two-dimensional discrete cosine transform process carried out on the dequantized values of the discrete cosine transform coefficients. Computation of inverse discrete cosine transforms for the arrays of dequantized discrete cosine transform coefficients for an image using conventional techniques can require substantial amounts of time, which can lead to problems. For example, it would be desirable for a personal computer to

4

be able to reconstruct 8 x 8 blocks of output image data "on the fly" from groups of compressed quantized transform coefficients received over a data bus in order to avoid the need to provide buffer storage for the received coefficients. However, even a modern high-end personal computer employing the fastest inverse-two-dimensional discrete cosine transform techniques known heretofore has difficulty keeping up with reconstituting 8 x 8 blocks of output image data on the fly from groups of compressed quantized transform coefficients which have been transmitted at an essentially maximum rate over a 64 kbit/sec ISDN ("Integrated Services Data Network") data bus.

We have invented a system and method for processing image data or the like which avoids problems of the prior art noted above and permits output images to be reconstituted efficiently on the fly from received sequences of groups of compressed quantized transform coefficients.

The image-data processing system of the invention includes a special-pattern testing mechanism for determining for each group of compressed quantized transform coefficients in turn whether the group corresponds to one of a predetermined plurality of special patterns of zero and nonzero quantized transform coefficients. Preferably, the special patterns of zero and non-zero quantized transform coefficients are patterns in which only a few of the lower-indexed coefficients are non-zero.

The image-data processing system of the invention further includes a plurality of special-pattern inverse-transform mechanism. Each special-pattern inverse-transform mechanism is associated with one of the special patterns of zero and nonzero quantized transform coefficients for performing an inverse scaled two-dimensional discrete-cosine-transform process on groups of transform coefficients determined by the special-pattern testing mechanism to correspond to the associated special pattern.

The image-data processing system of the invention also includes a full inverse-transform mechanism for performing a two-dimensional inverse scaled discrete-cosine-transform process on groups of transform coefficients determined by the special-pattern testing mechanism not to correspond to any of the predetermined plurality of special patterns of zero and nonzero quantized transform coefficients.

Preferred image-data processing methods of the invention can be carried out to advantage on a general-purpose programmable computer, personal computer or computer workstation.

Preferred image-data processing systems of the invention should be capable of carrying out image-data decompression operations at rates which are substantially greater than corresponding systems which employ conventional image-processing methods.

Preferred embodiments of the present invention are described below with reference to the following drawings.

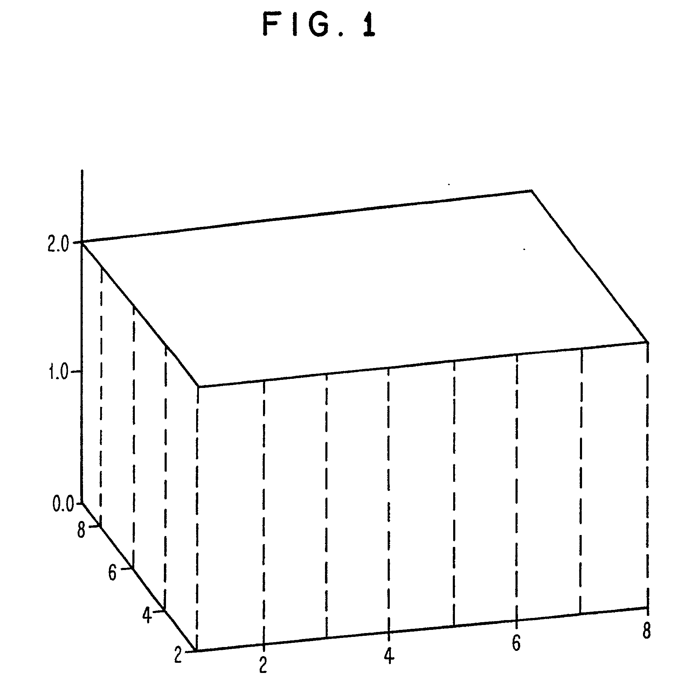

Figure 1 is a graph of the results of an inverse two-dimensional discrete cosine transform operation performed on an 8 x 8 array of rescaled discrete-cosine-transform coefficients in which the coefficient 0 - or DC coefficient - has the value one, the remaining coefficients are zero, and the scaling factor is eight.

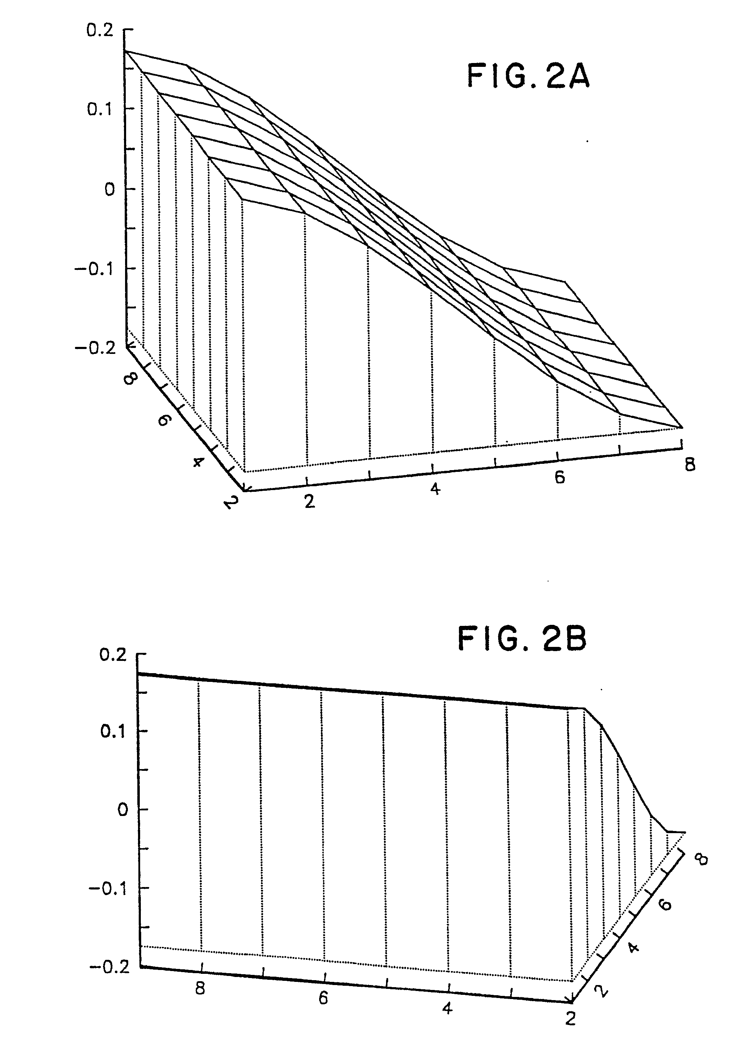

Figures 2A and 2B are graphs of the results of an inverse two-dimensional discrete cosine transform performed on an 8 x 8 array of rescaled discrete-cosine-transform coefficients in which the coefficient 1 has the value one, the remaining coefficients are zero, and the scaling factor is eight. Figure 2 A has a viewing angle of about 15 degrees and Figure 2B has a viewing angle of about 75 degrees.

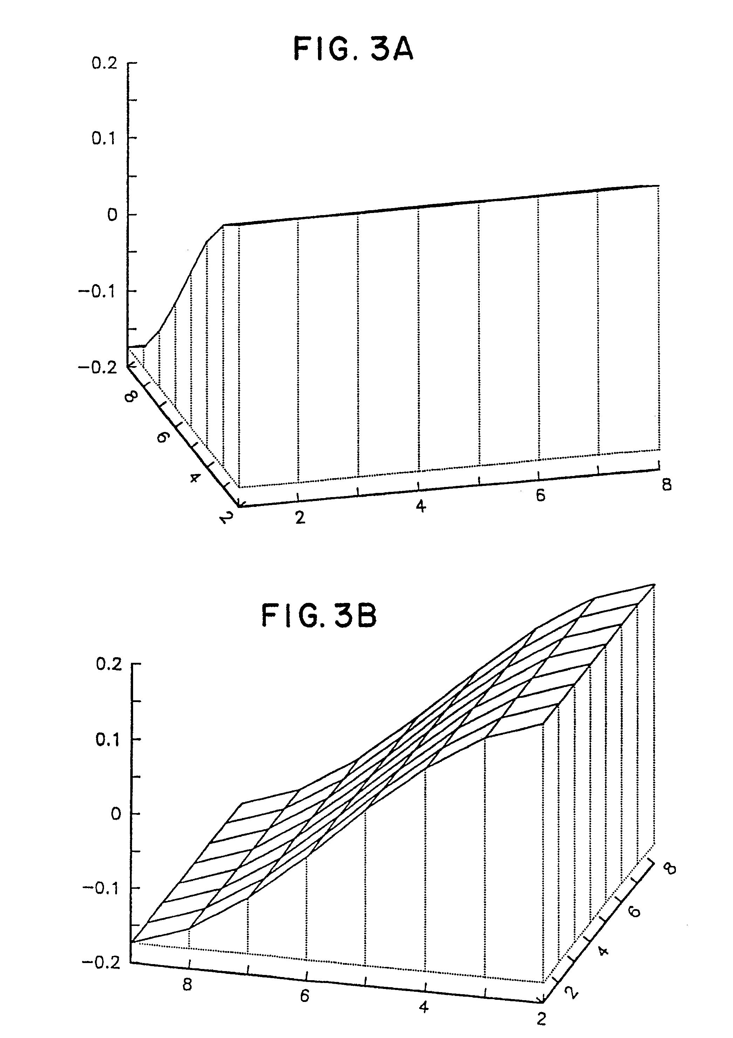

Figures 3A and 3B are graphs of the results of an inverse two-dimensional discrete cosine transform performed on an 8 x 8 array of rescaled discrete-cosine-transform coefficients in which the coefficient 2 has the value one, the remaining coefficients are zero and the scaling factor is eight. Figures 3A and 3B have viewing angles of about 15 degrees and about 75 degrees, respectively.

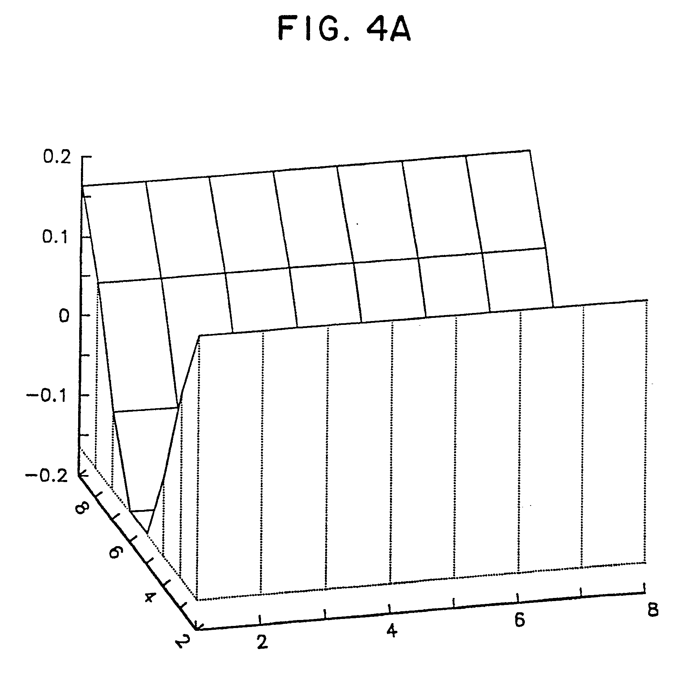

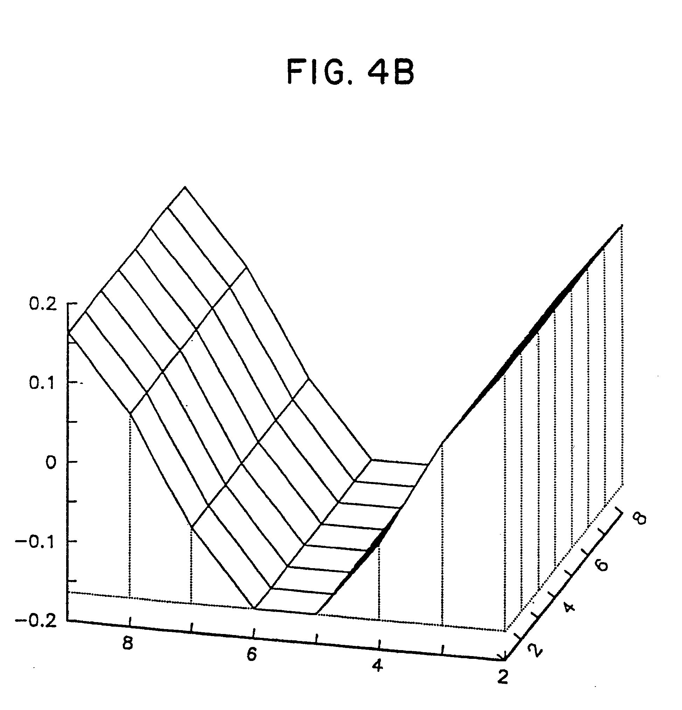

Figures 4A and 4B are graphs of the results of an inverse two-dimensional discrete cosine transform performed on an 8 x 8 array of rescaled discrete-cosine-transform coefficients in which the coefficient 3 has the value one, the remaining coefficients are zero, and the scaling factor is eight. Figures 4A and 4B have viewing angles of about 15 degrees and about 75 degrees, respectively.

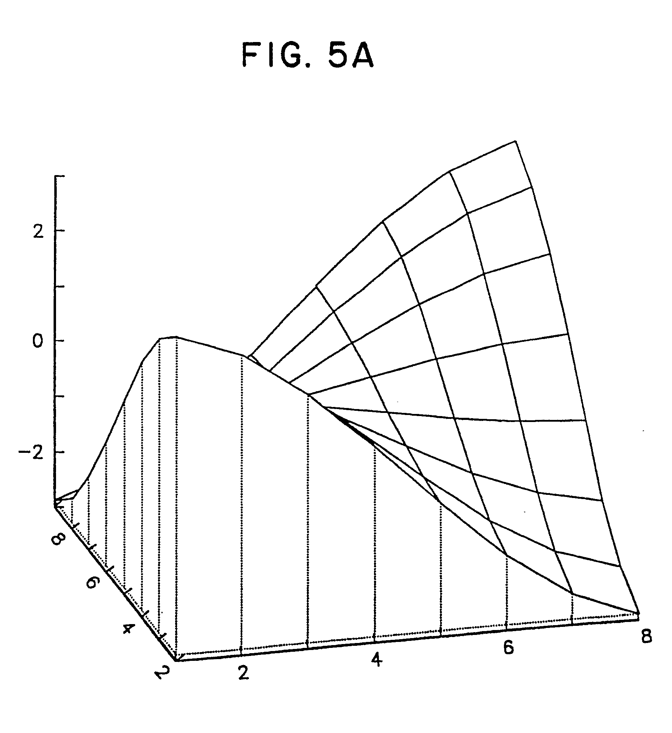

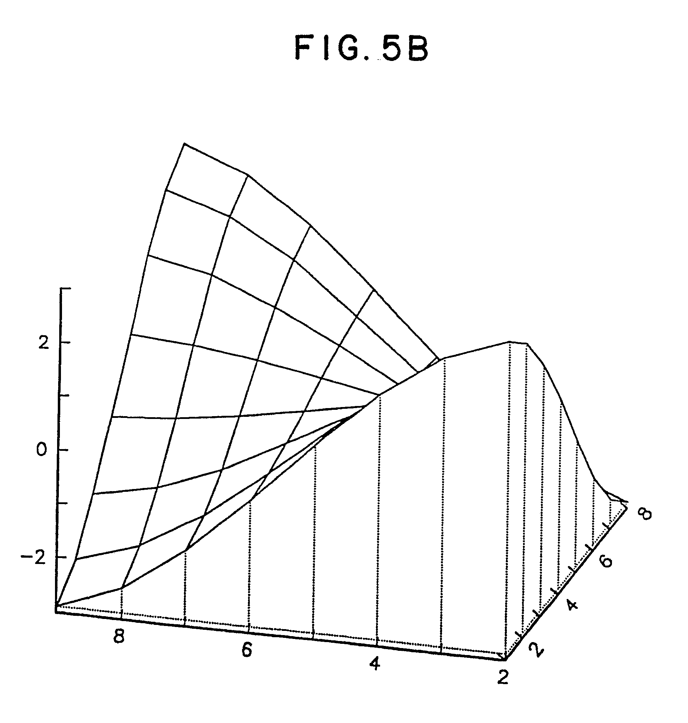

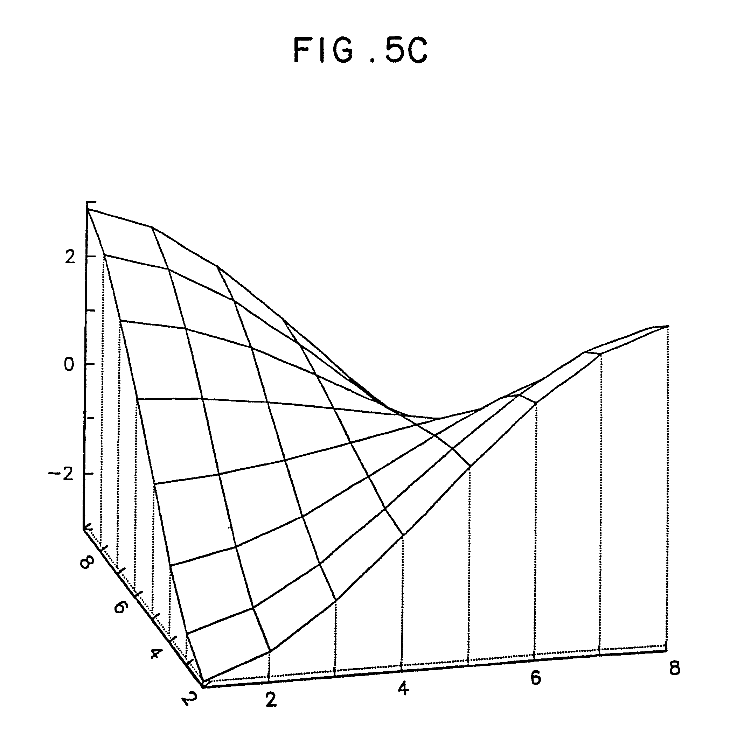

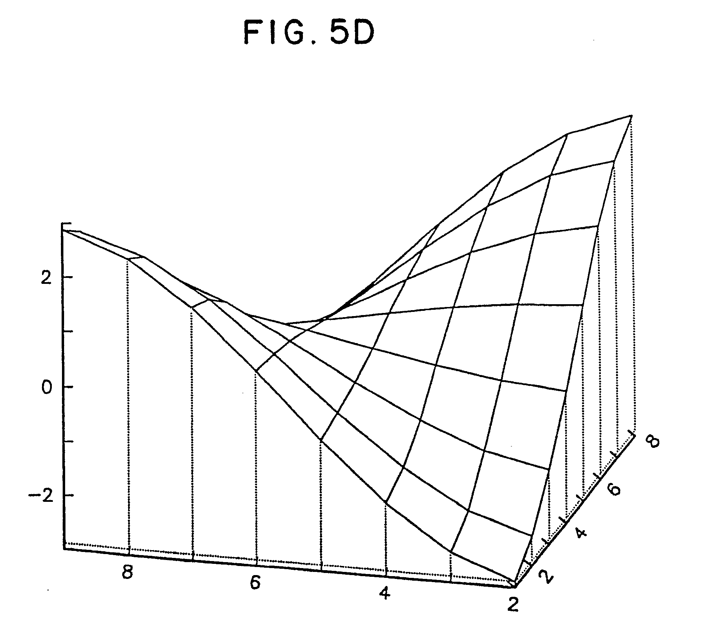

Figures 5A and 5B are graphs of the results of an inverse two-dimensional discrete cosine transform performed on an 8 x 8 array of rescaled discrete-cosine-transform coefficients in which the coefficient 4 has the value one, the remaining coefficients are zero, and the scaling factor is eight. Figures 5A, 5B, 5C, and 5D have viewing angles respectively of about 15, about 75, about 105 and about 165 degrees.

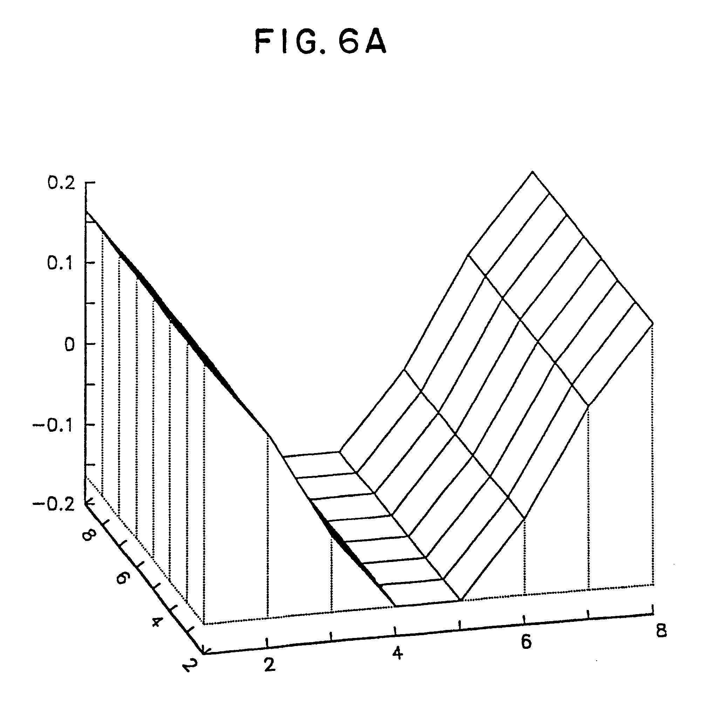

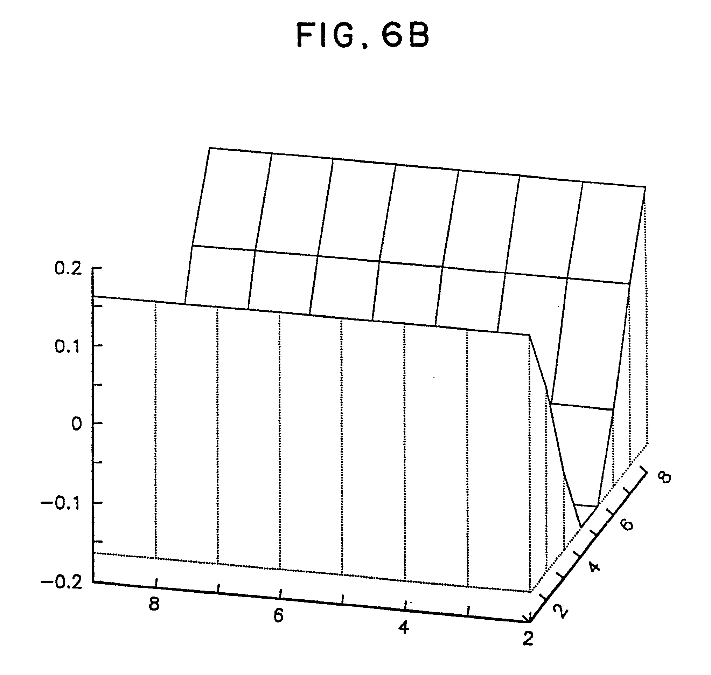

Figures 6A and 6B are graphs of the results of an inverse two-dimensional discrete cosine transform performed on an 8 x 8 array of rescaled discrete-cosine-transform coefficients in which the coefficient 5 has the value one, the remaining coefficients are zero, and the scaling factor is eight. Figures 6A and 6B have viewing angles respectively of about 15 degrees and about 75 degrees.

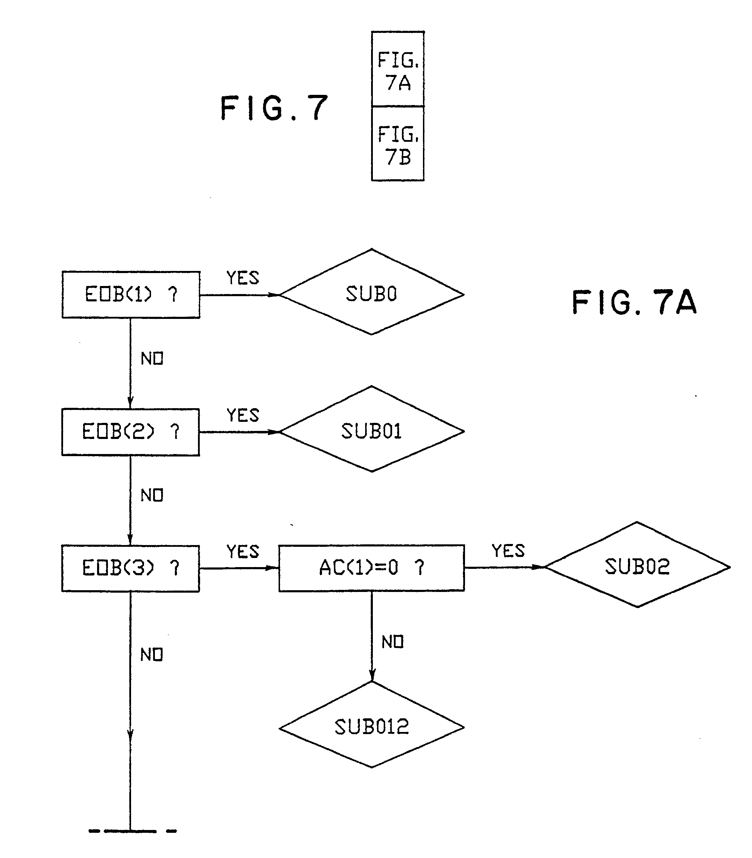

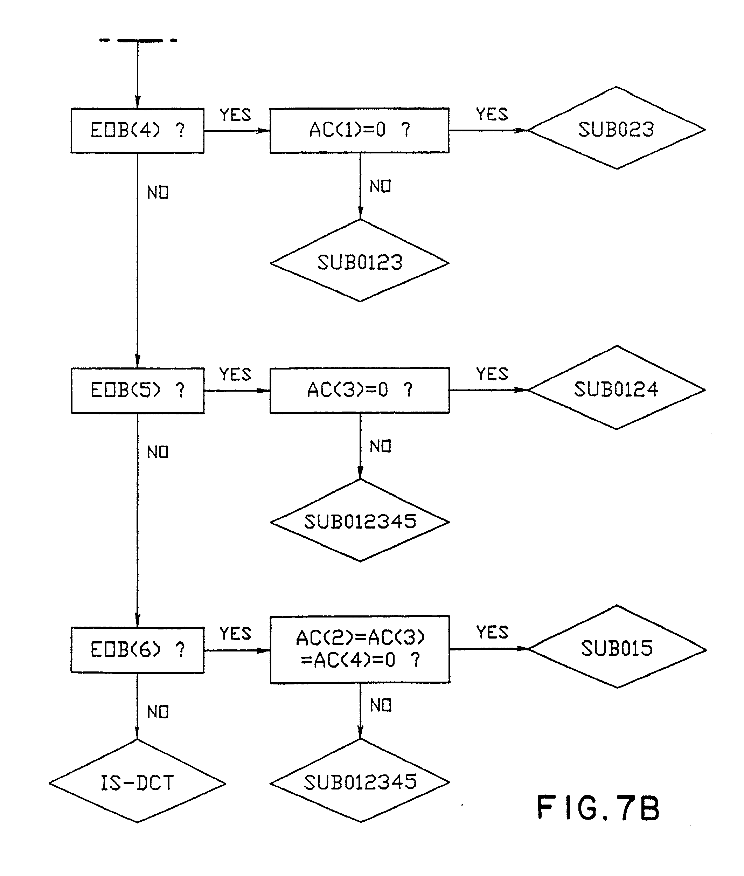

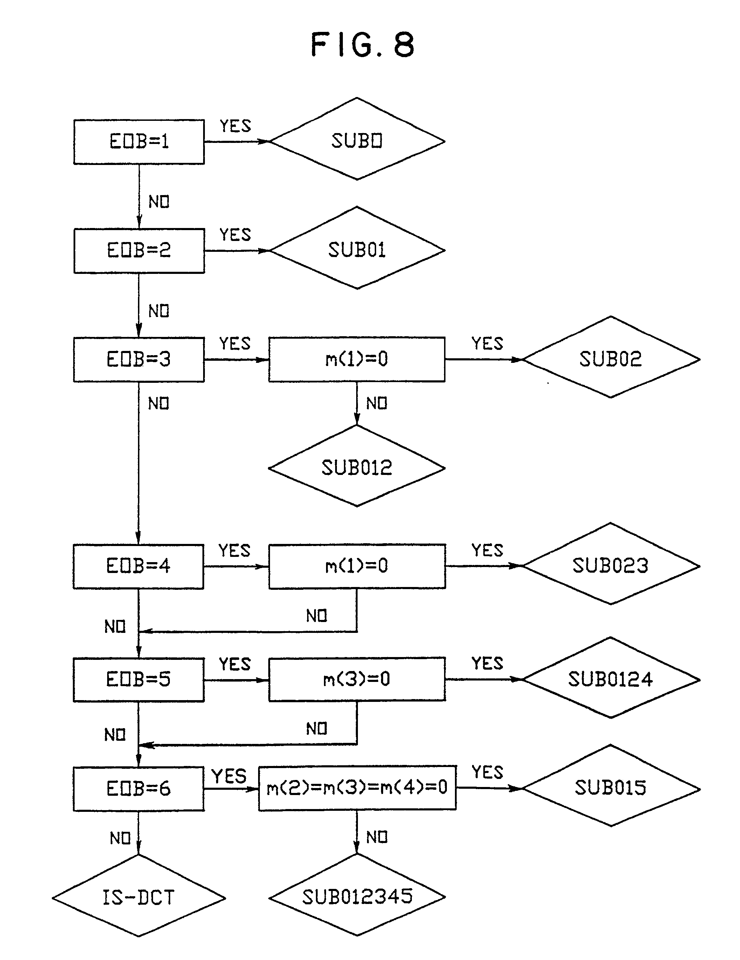

Figure 7 is a flow chart of a preferred image-data decompression process of the present invention.

In the sequences of blocks of quantized discrete-cosine-transform coefficients which arise in the representation continuous-tone color of typical images, block, having certain special patterns of non-zero and zero quantized discrete-cosine-transform coefficients tend to occur with a relatively high frequency, as discussed below.

The position of a last quantized discrete-cosine-transform coefficient in the zigzag-pattern-indexing order of Table 1 which is different from zero in a block of quantized coefficients is referred to as an "end-of-block" or "EOB" position. Statistics of the end-of-block positions for nine representative test images have been determined. To determine the statistics of the end-of-block positions, each of the nine test images was represented in terms of luminance, red-chrominance and blue-chrominance by respectively three sequences of blocks of quantized discrete-cosine-transform coefficients. A sequential discrete-cosine-transform system employing Huffman coding as described in the draft JPEG Technical Specifications using default quantization matrices set forth there was used to generate the quantized discrete-cosine-transform coefficients. Tables 2, 3 and 4 below set forth statistical data for luminance, red-chrominance, and blue-chrominance, respectively.

Each entry in Table 2 below provides the ratio to the total number of blocks of quantized discrete-cosine-transform coefficients for the luminance - on a per one thousand basis - of the number of blocks of such coefficients for which the end-of-block position, as indexed in the zigzag pattern indexing scheme of Table 1 above, either corresponds to the location of the entry in the Table taken in a lexographical order or corresponds to a lower zigzag-pattern-indexed position. A total of 58,320 blocks of luminance image data were obtained for the nine test images.

### Table 2. Cumulative Ratios for End-of-Block Positions for Luminance Component.

|      |      |      |      |      |      |      |      |
|------|------|------|------|------|------|------|------|
| 2    | 214  | 270  | 360  | 375  | 400  | 463  | 486  |
| 506  | 549  | 591  | 611  | 636  | 679  | 714  | 760  |
| 776  | 796  | 825  | 851  | 872  | 900  | 908  | 911  |
| 916  | 934  | 946. | 953  | 971  | 973  | 976  | 982  |
| 985  | 987  | 987  | 987  | 987  | 987  | 987  | 987  |
| 988  | 989  | 992  | 994  | 997  | 999  | 999  | 999  |
| 999  | 999  | 999  | 999  | 999  | 999  | 1000 | 1000 |

For example, for the luminance component, about 0.2 percent of the blocks of quantized discrete-cosine-transform coefficients were entirely zero, including the DC coefficient; about 21.2 percent (21.4 percent - 0.2 percent) of the blocks had a non-zero coefficient only in the DC position; and about 5.6 percent (27.0 percent -21.4 percent) had a highest-indexed non-zero coefficient in the first AC position. Entries corresponding to the remaining eight positions not shown in Table 2 were 1000.

Table 3 provides cumulative end-of-block position data for the red chrominance component for the nine test images. The data in Table 3 is analogous to the data for the luminance component of Table 2 above. The total number of blocks for the red-chrominance component was 29,160.

### Table 3. Cumulative Ratios for End-of-Block Positions for for Red-Chrominance Component.

|      |      |      |      |      |      |      |      |
|------|------|------|------|------|------|------|------|
| 119  | 631  | 750  | 809  | 826  | 856  | 940  | 953  |
| 977  | 989  | 993  | 993  | 993  | 994  | 996  | 999  |
| 1000 |      |      |      |      |      |      |      |

For the red chrominance component, about 11.9 percent of the blocks were entirely zero, including the DC coefficient; about 51.2 percent (63.1 percent - 11.9 percent) of the blocks had a non-zero coefficient in the DC position only; and about 11.9 percent (75.0 percent -63.1 percent) had the highest-indexed non-zero term in the first AC position. Entries for the 47 highest order positions not shown in Table 3 were 1000.

Table 4 provides cumulative end-of-block position data for the blue-chrominance component for the nine test images which is analogous to the cumulative end-of-block position data provided in Tables 2 and 3 above. The total number of blocks for the blue-chrominance component was 29,160.

Table 4. Cumulative Ratios for End-of-Block Positions for a Blue Chrominance Component.

| 112 | 685 | 802 | 860 | 873 | 896 | 961 | 972 |
| 987 | 993 | 996 | 996 | 996 | 996 | 997 | 1000 |

For the blue chrominance component, about 11.2 percent of the quantized discrete-cosine-transform blocks were entirely zero including the the DC coefficient; about 57.3 percent (68.5 percent - 11.2 percent) of the blocks had a non-zero coefficient only in the DC position; and about 11.7 percent (80.2 percent -68.5 percent) had the highest indexed non-zero coefficient in the first AC position. Entries for the 48 highest order positions not shown in Table 4 were 1000.

As can be seen from Tables 2 through 4 above, the end-of-block position is frequently less than seven. Moreover, blocks of quantized discrete-cosine-transform coefficients with the statistics of the patterns of non-zero and zero coefficients for end-of-block positions of less than seven reveal that certain special patterns occur particularly frequently. Frequently occuring special patterns of non-zero and zero quantized coefficients are shown in Table 5 along with a preferred test for identifying the special patterns.

Table 5.  Patterns of Non-zero and Zero Quantized
Discrete-Cosine-Transform Coefficients and
Corresponding Identification Tests.

|     pattern |     test |
| --- | --- |

```
0 . .      eob=1
. .
.


0 1 .      eob=2
. .
.


0 . .      eob=3   and AC(1)=0
2 .
.
0 1.       eob=3   and AC(1)≠ 0
2.
.


0 1 .      eob=5 and AC(3) = 0
2 4
.
```

```
0 1 5     eob=6 and AC(2)=AC(3)=AC(4)=0

  . .

  .



0 . .     eob=4 and AC(1) = 0

2 .

3



0 1 5     eob=6 and AC(2) ≠ 0 and

2 4                 AC(3) ≠ 0 and

3                   AC(4) ≠ 0
```

The graphs of Figures 1, 2, 3, 4, 5 and 6 illustrate the inverse discrete-cosine transforms of the respective coefficients 0, 1, 2, 3, 4 and 5 taken individually.

In Tables 6 through 9 below, statistics are provided relating to the relative occurance of patterns of non-zero and zero coefficients in blocks of quantized discrete-cosine-transform coefficients having end-of-block portions of less than seven. The statistical data in Tables 7 through 9 was obtained by analyzing blocks of quantized discrete-cosine-transform coefficients obtained from the nine representative test images using the default quantization matrices employed in connection with Tables 2 through 4 above.

Table 6 serves as an index for Tables 7 through 9. Specifically, each entry in Table 6 identifies a pattern of quantized discrete-cosine-transform coefficients having an end-of-block position of less than seven. The first entry in Table 6 represents a block of quantized discrete-cosine-transform coefficients of all zeroes. The last entry in Table 6 represents all patterns having an end-of-block position of seven or greater. The remaining entries of Table 6 specify in terms of the zigzag-pattern indexing scheme of Table 1 above patterns with non-zero quantized discrete-cosine-transform coefficients in the indicated position in the array of such coefficients and zeroes elsewhere. The pattern for each entry in each of Tables 7 through 9 is the pattern defined by the corresponding entry in Table 6.

Table 6.   Index of Patterns of Non-zero Quantized Discrete-Cosine-Transform of Coefficients.

| –   | 0    | 1    | 01    | 2    | 02    | 12    | 012    |
|-----|------|------|-------|------|-------|-------|--------|
| 3   | 03   | 13   | 013   | 23   | 023   | 123   | 0123   |
| 4   | 04   | 14   | 014   | 24   | 024   | 124   | 0124   |
| 34  | 034  | 134  | 0134  | 234  | 0234  | 1234  | 01234  |
| 5   | 05   | 15   | 015   | 25   | 025   | 125   | 0125   |
| 35  | 035  | 135  | 0135  | 235  | 0235  | 1235  | 01235  |
| 45  | 045  | 145  | 0145  | 245  | 0245  | 1245  | 01245  |
| 345 | 0345 | 1345 | 01345 | 2345 | 02345 | 12345 | 012345 |
| >6  |      |      |       |      |       |       |        |

Each entry of Table 7 below provides - for the luminance component - the ratio to the total number of blocks of quantized discrete-cosine-transform coefficients - on a per one thousand block basis - of the number of blocks having the pattern of non-zero and zero coefficients defined by the corresponding entry of Table 6.

Figure 7. Pattern Distribution for Luminance Component

| 2 | 212 | 1 | 56 | 1 | 46 | 1 | 41 |
|---|---|---|---|---|---|---|---|
| 0 | 2 | 0 | 2 | 0 | 7 | 0 | 4 |
| 0 | 3 | 0 | 3 | 0 | 3 | 0 | 10 |
| 0 | 0 | 0 | 0 | 0 | 2 | 0 | 3 |
| 0 | 6 | 0 | 20 | 0 | 4 | 0 | 11 |
| 0 | 0 | 0 | 1 | 0 | 1 | 0 | 2 |
| 0 | 2 | 0 | 3 | 0 | 2 | 0 | 8 |
| 0 | 0 | 0 | 1 | 0 | 1 | 0 | 2 |

537

Each entry of Table 8 below provides - for the red chrominance component - the ratio to the total number of blocks of quantized discrete-cosine-transform coefficients - on a per one thousand block basis - of the number of blocks having the pattern of non-zero coefficients defined by the corresponding entry of Table 6.

Table 8. Pattern Distribution for Red Chrominance Component

| 119 | 513 | 13 | 106 | 2 | 34 | 1 | 22 |
|---|---|---|---|---|---|---|---|
| 0 | 3 | 0 | 1 | 0 | 11 | 0 | 2 |
| 0 | 5 | 0 | 4 | 0 | 3 | 1 | 11 |
| 0 | 0 | 0 | 1 | 0 | 1 | 0 | 3 |
| 1 | 11 | 1 | 39 | 0 | 3 | 0 | 8 |
| 0 | 0 | 0 | 0 | 0 | 0 | 0 | 1 |
| 0 | 2 | 0 | 4 | 0 | 1 | 0 | 10 |
| 0 | 0 | 0 | 0 | 0 | 0 | 0 | 1 |

60

Finally, each entry of Table 9 below provides - for the blue-chrominance component - the ratio to the total number of blocks of quantized discrete-cosine-transform coefficients - on a per one thousand block basis - of the number of blocks having the pattern of non-zero coefficients defined by the corresponding entry of Table 6.

Table 9.  Pattern Distribution for Blue Chrominance
Component

| 112 | 572 | 9 | 109 | 2 | 37 | 1 | 17 |
|-----|-----|---|-----|---|----|---|----|
| 0 | 3 | 0 | 1 | 0 | 8 | 0 | 2 |
| 0 | 4 | 0 | 3 | 0 | 2 | 1 | 9 |
| 0 | 1 | 0 | 0 | 0 | 1 | 0 | 2 |
| 1 | 11 | 2 | 31 | 0 | 2 | 0 | 5 |
| 0 | 0 | 0 | 0 | 0 | 0 | 0 | 1 |
| 0 | 2 | 0 | 2 | 0 | 1 | 0 | 7 |
| 0 | 0 | 0 | 0 | 0 | 0 | 0 | 0 |
| 39 | | | | | | | |

As can be seen from Tables 7 through 9, only about 54 percent, about 6 percent, and about 4 percent of the blocks of quantized discrete-cosine-transform coefficients, respectively, for the luminance, red-chrominance and blue-chrominance components fall outside the special cases given in Table 5 for the nine representative test images analyzed.

A preferred program for use in reconstituting quantized image data is set forth in Appendix A to this specification in an APL programming language.

The program labelled "PRECOMPUTE" in Appendix A computes certain necessary constants. Seventeen multiplications are required for each image. These constants are computed once at the beginning of the image decompression routine and then stored.

Preferred subroutines for handling specific special patterns of non-zero and zero coefficients are set forth in Appendix A. These subroutines involve effectively mathematically exact procedures and have efficient finite-precision implementation. Table 10 below labels the subroutines, and arranges them in relationship to their dependencies: the subroutines to the right are called as subroutines by the corresponding subroutines to their left.

## Table 10.  Subroutines for Image Data Decompression.

SUB0

SUB01

SUB02

SUB012     .......   SUB02A

SUB015

SUB023

SUB0124    ......   SUB02A

SUB14A    ......    SUB1A

SUB4A

SUB012345 .....   SUB015

SUB4A

SUB23A

The labeling of the subroutines has been chosen to be suggestive of the special patterns of input data blocks handled by each of the subroutines. The numbers in the subroutine labels indicate which positions in the special pattern corresponding to the subroutine are different from zero. The letter "A" appears as a suffix whenever the output of the subroutine need not be stored in all 64 positions of the 8 x 8 array, but can be temporarily stored in perhaps smaller storage.

The subroutine SUB0 computes the scaled inverse discrete cosine transform when the input data is non-zero only for the 0 coefficient. It uses only one multiplication.

The routine SUB01 computes the scaled inverse discrete cosine transform when the input data is non-zero in positions 0 and 1 only. It uses five multiplications and four "sum/diff" operations. A sum/diff operation is defined to be a sum and a difference acting on identical pairs of inputs; i.e. a+b and a-b. The subroutine SUB02 is essentially the "transpose" of subroutine SUB01; that is, subroutine SUB02 is essentially the same as subroutine SUB01 except that the row labels and column labels have been interchanged. The subroutine SUB02 acts on data which is non-zero in positions 0 and 2 only.

The subroutine SUB015 computes the scaled inverse discrete cosine transform when the input data is non-zero in positions 0, 1, and 5 only. It uses seven multiplications and six sum/diff operations. The subroutine SUB023 is essentially the transpose of the subroutine SUB015 and acts on data which is non-zero in positions 0, 2, and 3 only.

The subroutine SUB012 computes the scaled inverse discrete cosine transform on data which is non-zero in positions 0, 1, and 2 only. It calls on subroutine SUB02A which is essentially the same as subroutine SUB02 except that subroutine SUBO2A only stores eight constants in eight memory locations instead of eight constants in 64 memory locations as does subroutine SUB02. Altogether, SUB012 uses nine multiplications and 36 sum/diff operations.

Subroutine SUB0124 acts on data which is non-zero in positions 0, 1, 2, and 4 only. It calls on subroutines SUB02A and SUB14A. Subroutine SUB02A was discussed above. Subroutine SUB14A in turn calls on subroutines SUB1A and SUB4A. Subroutine SUB1A uses four multiplications. Subroutine SUB4A uses four multiplications and four sum/diff operations. Subroutine SUB14A combines the results from subroutine with sixteen sum/diff operations. The results of subroutines SUB14A and SUB02A are combined with 64 additions. Altogether, subroutine SUB0124 uses thirteen multiplications, 24 sum/diff operations and 64 additions.

Subroutine SUB012345 acts on data which is non-zero only in positions 0, 1, 2, 3, 4, and 5. It calls on subroutines SUB015, SUB4A, and SUB23A. Subroutines SUB015 and SUB4A have already been discussed. Subroutine SUB23A uses six multiplications and four sum/diff operations. The results of subroutines SUB23A and SUB4A are combined with 32 sum/diff operations, which, in turn, are combined with the results of subroutine SUB015 with 64 additions. Altogether, subroutine SUB012345 uses seventeen multiplications, 46 sum/diff operations and 64 additions.

It can be seen that the arithmetic complexity of each of these routines compares quite favorably with the fastest known process for the complete inverse scaled discrete cosine transform, which uses 64 multiplications for rescaling plus 54 multiplications, 6 shifts and 462 additions for the scaled inverse discrete cosine transform. Also, many of the additions and subtractions occur in pairs - the sum/diff operations - which allow for fast machine implementation due to efficient register utilization.

In the preferred image-data decompression process of the invention the special-pattern subroutines listed in Table 10 above are used together with a full two-dimensional inverse discrete cosine transform routine such as the routine disclosed in United States patent application Serial No. 07/403,631, filed September 6, 1989. Each block of compressed quantized transform coefficients to be deccmpressed is checked to determine if it has a pattern of non-zero and zero quantized coefficients for which processing by one of the special pattern subroutines would be most efficient. If none of the special pattern subroutines is appropriate, the block of coefficients is processed by the full two-dimensional inverse discrete-cosine transform routine.

A particularly preferred procedure for checking blocks of compressed quantized transform coefficients for special patterns of non-zero and zero coefficients involves the use of a 64-entry look-up table termed an end-of-block assignment table. Each entry of the end-of-block assignment table has an address j in the range of from 1 to 64 and an associated table pointer EOBP(j) which points to one of the special pattern subroutines or the full inverse discrete cosine transform routine. Each block of compressed quantized transform coefficients includes a descriptor field which specifies the end-of-block position. The end-of-block position value ranges form 1 to 64 and is used as an address to obtain the associated value from the end-of-block assignment table. The value thus obtained is used in determining how the block of coefficients is to be processed. The pointer EOBP(1) assigns the data to be processed by the subroutine SUB0. The pointer EOBP(2) in the end-of-block assignment table assigns the data to be processed by SUB01. The pointer EOBP(3) assigns the data to be processed by a subroutine as follows: First it is checked if the coefficient AC(1) is 0 or not. If the coefficient AC(1) is zero, then the data is assigned to be processed by the subroutine SUB02; otherwise the data is assigned to to be processed by the subroutine SUB012.

The pointer EOBP(4) assigns the data to be processed by a subroutine as follows: First it is checked to determine if the coefficient AC(1) is 0 or not. If the entry is zero, the data is assigned to be processed by the subroutine SUB023; otherwise the data is assigned to to be processed by the subroutine SUB0124.

The pointer EOBP(5) in the end-of-block assignment table assigns the data to be processed by a subroutine as follows: First it is checked to determine if the coefficient AC(3) is 0 or not. If the entry is zero, the data is assigned to be processed by the subroutine SUB0124; otherwise the data is assigned to to be processed by the subroutine SUB012345.

The pointer EOBP(6) assigns the data to be processed by a subroutine as follows: First it is checked to determine if the coefficients AC(2), AC(3) and AC(4) are all 0 or not. If the three values are all zero, the data is assigned to be processed by the subroutine SUB015; otherwise the data is assigned to be processed by the subroutine SUB012345. For each j greater than 6, the pointer EOBP(j) assigns the data to be processed by the full inverse scaled discrete cosine transform routine.

An alternate embodiment utilizes the flow chart depicted in Figure 7. The method of Figure 7 is a generally similar to that described above except the end-of-assignment table has been replaced by a sequence of if-then commands.

It is not intended to limit the present invention to the specific embodiments described above. It is recognized that changes may be made in the systems and processes specifically described herein without departing from the scope and teaching of the present invention, and it is intended to encompass all other embodiments, alternatives, and modifications consistent with the invention.

APPENDIX A

90/01/08 14:26:12 *** Function PRECOMPUTE ***

```
      ∇ PRECOMPUTE;M
[1]   'ENTER DEQUANTIZER MATRIX'
[2]   M←□
[3]   DC←.125×M[1;1]
[4]   C211←C1×M[2;1]
[5]   C213←C3×M[2;1]
[6]   C215←C5×M[2;1]
[7]   C217←C7×M[2;1]
[8]   C121←C1×M[1;2]
[9]   C123←C3×M[1;2]
[10]  C125←C5×M[1;2]
[11]  C127←C7×M[1;2]
12]   C132←C2×M[1;3]
L13]  C136←C6×M[1;3]
[14]  C312←C2×M[3;1]
[15]  C316←C6×M[3;1]
[16]  D220←D0×M[2;2]
[17]  D222←D2×M[2;2]
[18]  D224←D4×M[2;2]
[19]  D226←D6×M[2;2]
[20]ɐCJ = (2○○J÷16)÷4×2*.5
[21]ɐDJ = (2○○J÷16)÷8
      ∇
```

90/01/23 13:38:02 *** Function SUB0 ***

```
      ∇ N←SUB0 M
[1]   N←(8 8)ρDC×M[1;1]
      ∇
```

90/01/08 14:28:47 *** Function SUB01 ***

```
      ∇ N←SUB01 M;DC;M0;M1;M2;M3;M4;P;SD1;SD2;J;JJ
[1]   N←(8 8)ρ0
[2]   ɐ************ 5 MULTIPLICATIONS *****************
[3]   M0←DC×M[1;1]
[4]   M1←C121×M[1;2]
5]    M2←C123×M[1;2]
L6]   M3←C125×M[1;2]
[7]   M4←C127×M[1;2]
[8]   P←M1,M2,M3,M4
[9]   J←0
[10]ɐ*********** 4 SUMDIFFS *********************
[11]LP:→(4<J←J+1)/0
[12]  JJ←9-J
[13]  SD1←M0+P[J]
[14]  SD2←M0-P[J]
[15]  N[;J]←SD1
[16]  N[;JJ]←SD2
[17]  →LP
      ∇
```

```
                                    90/01/08 14:28:27 *** Function SUB012 ***
        ∇ N←SUB012 M;P;M1;M2;M3;M4;Q1;Q2;J;I;JJ;II
[1]   N←(8 8)ρ0
[2] ⍝ ***** 5  MULTIPLICATIONS + 4  SUMDIFFS ************
[3]   SD2←SUB02A M
[4] ⍝ ***** 4  MULTIPLICATIONS  *************************
[5]   M1←C121×M[1;2]
[6]   M2←C123×M[1;2]
[7]   M3←C125×M[1;2]
[8]   M4←C127×M[1;2]
[9]   P←M1,M2,M3,M4
[10] J←0
[11]⍝ ***** 32  SUMDIFFS  **************************
[12]LP1:→(8<J←J+1)/0
[13] JJ←9-J
[14] I←0
[15]LP2:→(4<I←I+1)/NXT
[16] II←9-I
[17] Q1←SD2[J]+P[I]
[18] Q2←SD2[J]-P[I]
[19] N[J;I]←Q1
[20] N[J;II]←Q2
[21] →LP2
[22]NXT:
[23] →LP1
        ∇

                                    90/01/08 14:23:52 *** Function SUB012345 ***
        ∇ N←SUB012345 M;N1;N2;J;JJ
[1] ⍝*********** 6 MULTS + 4 SUMDIFFS  *************
[2]   N1←SUB23A M
[3] ⍝*********** 4 MULTS + 4 SUMDIFFS  *************
[4]   N2←SUB4A M
[5]   N←(8 8)ρ0
[6]   J←0
[7] ⍝***************** 32 SUMDIFFS  *************
[8]  LP1:→(4<J←J+1)/NXT1
[9]   N[J;⍳4]←N1[J]+N2[J;⍳4]
[10] N[J;4+⍳4]←⌽N1[J]-N2[J;⍳4]
[11] →LP1
⌐12]NXT1:
[13] J←0
[14] N2←⊖N2
[15]LP2:→(4<J←J+1)/NXT2
[16] JJ←J+4
[17] N[JJ;4+⍳4]←⌽N1[JJ]+N2[J;⍳4]
[18] N[JJ;⍳4]←N1[JJ]-N2[J;⍳4]
[19] →LP2
[20]NXT2:
[21]⍝*********** 7 MULTS + 6 SUMDIFFS  *************
[22] N1←SUB015 M
[23]⍝************* 64 ADDITIONS  *****************
[24] N←N+N1
        ∇
                                    90/01/05 14:57:38 *** Function SUB0124 ***
```

```
     ∇ N←SUB0124 M;A;B
[1]A************* 5 MULTS + 4 SUMDIFFS ****
[2] A←SUB02A M
[3]A************* 8 MULTS + 20 SUMDIFFS ***
[4] B←SUB14A M
[5]A************* 64 ADDITIONS ***********
[6] N←B+⍉(8 8)ρA
     ∇
```

```
     ∇ N←SUB015 M;SD;M0;M1;M2;S1;S2;I;II;M3;M4;P
[1]  N←(8 8)ρ0
[2] A******* 3 MULTS + 2 SUMDIFFS ***********
[3]  M0←DC×M[1;1]
[4]  M1←C132×M[1;3]
[5]  M2←C136×M[1;3]
[6]  S1←M0+M1
[7]  S2←M0-M1
[8]  SD←S1,S2
[9]  S1←M0+M2
[10] S2←M0-M2
[  ] SD←SD[1],S1,S2,SD[2]
[12]A****** 4 MULTS + 4 SUMDIFFS ***********
[13] M1←C121×M[1;2]
[14] M2←C123×M[1;2]
[15] M3←C125×M[1;2]
[16] M4←C127×M[1;2]
[17] P←M1,M2,M3,M4
[18] I←0
[19]LP:→(4<I←I+1)/0
[20] II←9-I
[21] S1←SD[I]+P[I]
[22] S2←SD[I]-P[I]
[23] N[;I]←S1
[24] N[;II]←S2
[25] →LP
     ∇
```

```
     ∇ N←SUB02 M;M0;M1;M2;M3;M4;P;SD1;SD2;J;JJ
[1]  N←(8 8)ρ0
[2] A*********** 5 MULTIPLICATIONS *****************
[3]  M0←DC×M[1;1]
[4]  M1←C211×M[2;1]
[5]  M2←C213×M[2;1]
[6]  M3←C215×M[2;1]
[7]  M4←C217×M[2;1]
[8]  P←M1,M2,M3,M4
[9]  J←0
[10]A*********** 4 SUMDIFFS ***********************
[11]LP:→(4<J←J+1)/0
[12] JJ←9-J
[13] SD1←M0+P[J]
[14] SD2←M0-P[J]
[15] N[J;]←SD1
[16] N[JJ;]←SD2
[17] →LP
     ∇
```

16

```
                                              90/01/08 14:30:37 *** Function SUB02A ***
       ∇ SD2←SUB02A M;S1;M0;M1;M2;M3;M4;SD1;SD2;P;J;SDA;SDB
[1] ₳*************   5  MULTIPLICATIONS **************
[2]   M0←DC×M[1;1]
[3]   M1←C211×M[2;1]
[4]   M2←C213×M[2;1]
[5]   M3←C215×M[2;1]
[6]   M4←C217×M[2;1]
[7]   P←M1,M2,M3,M4
[8]   SDA←SDB←0ρ0
[9]   J←0
[10]₳************  4  SUMDIFFS ********************
[11]LP:→(4<J←J+1)/END
[12]  SD1←M0+P[J]
[13]  SD2←M0-P[J]
[14]  SDA←SDA,SD1
[15]  SDB←SDB,SD2
[16]  →LP
   7]END:
 ₪18]  SD2←SDA,⌽SDB
      ∇
```

```
                                              90/01/08 14:30:56 *** Function SUB023 ***
       ∇ N←SUB023 M;SD;M0;M1;M2;S1;S2;I;II;M3;M4;P
[1]   N←(8 8)ρ0
[2]   ₳******  3 MULTS + 2 SUMDIFFS  ************
[3]   M0←DC×M[1;1]
[4]   M1←C312×M[3;1]
[5]   M2←C316×M[3;1]
[6]   S1←M0+M1
[7]   S2←M0-M1
[8]   SD←S1,S2
[9]   S1←M0+M2
[10]  S2←M0-M2
[11]  SD←SD[1],S1,S2,SD[2]
[12]₳****** 4 MULTS + 4 SUMDIFFS  ************
[13]  M1←C211×M[2;1]
[14]  M2←C213×M[2;1]
[15]  M3←C215×M[2;1]
[16]  M4←C217×M[2;1]
   7]  P←M1,M2,M3,M4
 ₪8]  I←0
[19]LP:→(4<I←I+1)/0
[20]  II←9-I
[21]  S1←SD[I]+P[I]
[22]  S2←SD[I]-P[I]
[23]  N[I;]←S1
[24]  N[II;]←S2
[25]  →LP
      ∇
```

```
                                              90/01/08 14:17:53 *** Function SUB1A ***
       ∇ SUB1←SUB1A M;M0;M1;M2;M3;M4;J
[1]₳*************** 4 MULTIPLICATIONS **************
[2]  M1←C121×M[1;2]
[3]  M2←C123×M[1;2]
[4]  M3←C125×M[1;2]
[5]  M4←C127×M[1;2]
[6]  SUB1←M1,M2,M3,M4
      ∇
```

```
                                                90/01/05 14:55:44 *** Function SUB14A ***
        ∇ N←SUB14A M;J;JJ
[1]  A********  4 MULTIPLICATIONS  *****************
[2]  SUB1←SUB1A M
[3]  A********  4 MULTS + 4 SUMDIFFS  ***************
[4]  SUB4←SUB4A M
[5]  N←(8 8)ρ0
[6]  J←0
[7]  A********  16 SUMDIFFS  *********************
[8]  LP:→(4<J←J+1)/0
[9]  JJ←9-J
[10] N[ι4;JJ]←-N[ι4;J]←SUB1[J]+SUB4[;J]
[11] N[4+ι4;JJ]←-N[4+ι4;J]←φSUB1[J]-SUB4[;J]
[12] →LP
        ∇
```

```
                                                90/01/08 14:22:30 *** Function SUB23A ***
        ∇ N←SUB23A M;M1;M2;M3;M4;M5;M6;N1;N2
[1]  N←(8 8)ρ0
[2]  A**********  6 MULTIPLICATIONS  ********************
[3]  M1←C312×M[3;1]
[4]  M2←C316×M[3;1]
[5]  M3←C211×M[2;1]
[6]  M4←C213×M[2;1]
[7]  M5←C215×M[2;1]
[8]  M6←C217×M[2;1]
[9]  A**********  4  SUMDIFFS  ***********************
[10] N1←(M3+M1),(M4+M2),(M5-M2),(M6-M1)
[11] N2←(M3-M1),(M4-M2),(M5+M2),(M6+M1)
[12] N←N1,-φN2
        ∇
```

```
                                                90/01/08 14:17:45 *** Function SUB4A ***
        ∇ SUB4←SUB4A M;M0;M2;M4;M6;I;II;S1;S2;P;S;S
[1]  A**********  4 MULTIPLICATIONS + 4 SUMDIFFS  *************
[2]  M0←D220×M[2;2]
[3]  M2←D222×M[2;2]
[4]  M4←D224×M[2;2]
[5]  M6←D226×M[2;2]
[6]  P←M0,M2,M4,M6
[7]  I←0
[8]  S←0ρ0
[9]  LP:→(3<I←I+1)/NXT
[10] II←I+1
[11] S1←P[I]+P[II]
[12] S2←P[I]-P[II]
[13] S←S,S1,S2
[14] →LP
[15] NXT:
[16] S1←P[1]+P[4]
[17] S2←P[1]-P[4]
[18] S←S,S1,S2
[19] S←S[1],S[3],S[5],M6,S[3],S[7],M2,S[6],S[5],M2,S[8],S[4],M6
[20] SUB4←(4 4)ρS,S[6],S[4],S[2]
        ∇
```

## Claims

1. A system for processing a sequence of groups of compressed quantized transform coefficients representing a two-dimensional image, comprising:

   (a) special-pattern testing means for determining for each group of compressed quantized transform coefficients in turn whether the group corresponds to one of a predetermined plurality of special patterns of zero and nonzero quantized transform coefficients;

   (b) a plurality of special-pattern inverse transform means, each special-pattern inverse-transform means being associated with one of the special patterns of zero and nonzero quantized transform coefficients for performing an inverse scaled two-dimensional discrete-cosine-transform process on groups of transform coefficients determined by the special-pattern testing means to correspond to the associated special pattern; and

   (c) full inverse-transform means for performing an inverse scaled two-dimensional discrete-cosine-transform process on groups of transform coefficients determined by the special-pattern testing

18

means not to correspond to any of the predetermined plurality of special patterns of zero and nonzero quantized transform coefficients.

# F I G . 1

FIG. 2A

FIG. 2B

# FIG. 3A

# FIG. 3B

22

# FIG. 4A

# FIG. 4B

EP 0 443 114 A2

# FIG. 5A

25

# FIG. 5B

FIG .5C

# FIG. 5D

# FIG. 6A

# FIG. 6B

# FIG. 7

FIG. 7A

FIG. 7B

# FIG. 7A

EOB(1) ? —YES→ SUB0

│ NO
↓

EOB(2) ? —YES→ SUB01

│ NO
↓

EOB(3) ? —YES→ AC(1)=0 ? —YES→ SUB02

│ NO                  │ NO
↓                     ↓
                   SUB012

FIG.7B

# FIG. 8